# EUROPEAN PATENT SPECIFICATION

(11) **EP 2 811 829 B1**
(45) Date of publication and mention of the grant of the patent: **14.11.2018**
(21) Application number: 13701738.0
(22) Date of filing: 18.01.2013
(51) Int. Cl.: A01N 25/02, A01N 25/04, A01N 25/30, A01P 21/00, A01P 3/00, A01P 7/04, A01P 13/00

(54) **PROCESS FOR ENHANCING PLANT GROWTH**
VERFAHREN ZUR STEIGERUNG DES PFLANZENWACHSTUMS
PROCÉDÉ POUR AUGMENTER LA CROISSANCE DE PLANTES

(30) Priority: 23.01.2012 US 201261589863 P
(43) Date of publication of application: 17.12.2014
(73) Proprietor: Syngenta Limited, Bracknell, Berkshire RG42 6EY (GB)
(72) Inventor: STOCK, David, Bracknell Berkshire RG42 6EY (GB); TAYLOR, Philip, Bracknell Berkshire RG42 6EY (GB); PERRY, Richard, Brian, deceased (GB)
(74) Representative: Syngenta International AG
(86) International application number: PCT/EP2013/050913
(87) International publication number: WO 2013/110552

(56) References cited:
- EP-B1- 1 740 043
- WO-A1-03/031535
- WO-A1-2008/037379
- WO-A1-2009/137096
- US-A- 5 921 023
- US-A1- 2002 035 052
- US-A1- 2009 149 557
- Safety Data Sheet: H2pro Trismart
- Safety Data Sheet: Aqua-Zorb
- Safety Data Sheet: REVOLUTION

## Description

The present invention relates generally to methods of enhancing plant growth comprising mixtures of certain terpenic alkoxylate and block copolymer surfactants and to the use of such compositions to improve the performance of plant growth media and soils including the wetting, infiltration and water retention properties of water repellent plant growth media and soils.

### BACKGROUND OF THE INVENTION

The water repellence of soils or other plant growth media can directly affect its utility for supporting plant growth and development by impeding water infiltration and water retention into plant root systems. In particular, this condition may lead to runoff, erosion, and leaching as well as localized dry spots within highly managed turf areas and/or lawns. Such localized dry spots often lead to imperfections such as dry-patch which have an adverse effect on the playing quality and aesthetic appearance of playing surfaces.

Anionic wetting agents, such as soap or mild detergents, have been used for decades to enhance water penetration into hydrophobic soils. However, these substances are frequently phytotoxic and may adversely affect soil structure. More recently, the use of non-ionic wetting agents has become commonplace for treatment of hydrophobic soils in areas such as golf courses, sports fields or other such intensely managed green spaces or amenity turf areas to maintain optimal turf grass health and improve water use efficiency. The use of non-ionic turf wetting materials has a number of advantageous effects including an increase in the speed/effectiveness of hydration of subsoil thereby increasing efficacy of irrigation processes (less water over shorter period of time). This has economies of water usage and also increased duration of availability of playing surfaces based on turf.

Within current commercial practice it is common to use soil-wetters based on polymers and polymeric non-ionic surfactants for the purpose of increased wetting/hydration of thatch and subsoil. For example, polymeric non-ionic surfactants are typically used to improve the wetting and water retention of water repellent soils due to their proven efficacy and phyto-safety. Likewise, certain alkylene oxide polymers have been used widely in the golf course industry to maintain optimal turf grass health and improve water use efficiency.

In addition to wetting soils, there is also potential to apply wetting agents in combination with agrochemical materials for maintenance of turf and a variety of agricultural crops. Such materials include herbicides (for removal of problem grass species), fungicides, insecticides, plant growth regulators, fertilizers and nutrients. If the wetting agent composition can also exert adjuvant-properties this is an additional benefit beyond water management. Typically polymer based materials have negligible adjuvant properties as they are too large in molecular term to act as penetration promoters.

WO 03/031535 (Aquatrol Corp) 17 April 2003 relates to a water composition of the wetting of plant growth media which comprises alkyl polyglycosides and ethylene-oxide-propylene-oxide block copolymers. US 5 921 023 (Ogawa Kinya et al) 13 July 1999 relates to a composition for the treatment of dry spots on golf grass which comprises a non-ionic surfactant (polyoxyethylene-polyoxypropylene glycol) and a water soluble cellulose derived polymer. EP 1 740 043 B1 (Aquatrol Corp) 29 August 2009 relates to a water composition of the wetting of plant growth media which comprises alkyl ethers of methyl oxirane - oxirane copolymer surfactants.

Therefore, it would be advantageous to provide multifunctional wetting compositions and methods for use thereof that provide enhanced growing media wetting performance in addition to enhanced bioavailability of co-applied agrochemical materials.

### SUMMARY OF THE INVENTION

Disclosed is a growing media wetting composition comprising at least one non-ionic alkylene oxide copolymer and at least one terpenic alkoxylate. In one aspect, the non-ionic alkylene oxide copolymer is present in the composition in a major amount and the terpenic alkoxylate is present in the composition in a minor amount.

In another aspect, the non-ionic alkylene oxide copolymer component is a non-ionic copolymer of ethylene oxide (EO) and propylene oxide (PO). When used herein, the term "terpenic" in the context of the terpenic alkoxylate component is indicative of a moiety having terpenic origin. In a further embodiment, the wetting composition of the invention may also contain water and/or one or more organic diluents such alkyl alcohols and/or glycols.

The present invention provides a method of using of the above described wetting composition to enhance plant growth in plant growth media by contacting the plants, parts of plants, seeds, their locus of growth or the plant growth media with an effective amount of said wetting composition.

The invention further provides a method of reducing the development of dry patch (localised dry spot) at a locus such as soil or turf grass by contacting the locus with an effective amount of said wetting composition.

In another embodiment, a method of reducing the hydrophobicity of plant growth media is provided which comprises the application an effective amount of said wetting composition to the plant growth media.

In another aspect of the present invention, there is provided a method of enhancing the bio-efficacy or bio-availability of at least one agrochemical said method comprising applying the agrochemical to plants, parts of plants, seeds, or at their locus of growth in any desired sequence, including simultaneously, separately, or in succession with a wetting composition according to the present invention in an amount effective to enhance bio-efficacy or bio-availability of said at least one agrochemical.

In the practice of the invention, the wetting composition of the invention can be applied as a concentrate or by dispersing the concentrate according to the present invention in water for use as a diluted aqueous end-use formulation.

The wetting composition may be applied directly or with dilution in water alone or in combination with agrochemical materials such as insecticides, fungicides, herbicides, growth regulators, fertilizers or nutrients.

### DETAILED DESCRIPTION

In one embodiment, the wetting agent of the invention is useful to help in the management of water in turfgrass rootzones, and to help prevent dry patch (localised dry spot).

In another embodiment, the wetting composition according to the invention comprises at least one non-ionic alkylene oxide copolymer (a) and at least one terpenic alkoxylate penetrant (b). Advantageously, when applied to a locus such as turfgrass, the penetrant component (b) drives more efficient water movement and distribution within the rootzone; while the polymer component (a) holds moisture deeply and evenly within the rootzone.

In one embodiment, the wetting composition according to the invention is adapted for use on all areas of golf courses, sports fields and other amenity turf areas.

The various aspects of the present invention mentioned above, as well as many other aspects of the invention are described in greater detail below.

Disclosed is a growing media wetting composition of the present invention comprises:
(a) at least one non-ionic alkylene oxide copolymer represented by the formula (I)

   R₁-O-(CH₂CH₂O)ₓ(CH(CH₃)CH₂O)y(CH₂CH₂O)_{z}-R₂ (I)

   wherein R₁ and R₂ are independently selected from hydrogen and linear or branched C₁-C₈ alkyl; and wherein the values of x, y and z are each other than zero and the sum of x, y and z is chosen so that there is from 10 to 80% of ethylene oxide (EO) present in the copolymer and where the number average molecular weight of the copolymer is from 1000 to 6500; and
(b) at least one terpenic alkoxylate selected from a compound of the formulae (II):

   R₃-O-(CH(R₄)CH₂O)ₙ-(CH(R₄)CH₂O)ₘ-R₅ (II)

   wherein R₃ is a terpenic moiety selected from the group consisting of terpenic carbides, oxidized derivatives of terpenic carbides (such as hydroformylation derivatives), terpenic alcohols, terpenic aldehydes and ketones, and mixtures thereof; R₄ is selected from hydrogen and methyl (i.e., the -(CH(R₄)CH₂O)- units of the alkylene oxide moiety of formula (II) are selected from ethylene oxide (EO) and propylene oxide (PO) in either a block or random configuration); R₅ is selected from hydrogen and linear or branched C₁-C₈ alkyl; and where n and m are each other than zero and wherein the sum of n and m is chosen so that there are from 2 to 10 propylene oxide units and from 5 to 25 ethylene oxide units.

The non-ionic alkylene oxide block copolymer molecule (a) is an EO-PO-EO copolymer, having a molecular weight of about 2450, and wherein 20% of molecule is polyethylene glycol.

Suitable non-ionic alkylene oxide block copolymers (a) for use in the growing media wetting composition of the present invention generally are known from the literature or may be prepared by processes known from the literature and are also commercially available, for example, under the PLURONIC® family of alkylene oxide block copolymers (BASF).

In one aspect, the terpenic moiety R₃ is a moiety derived β-pinene.

The growing media wetting composition of the present invention may further contain (c) other inert additives such as standard formulation components and diluents. Such inert additives include flow enhancers, other wetting agents, antifoaming agents, biocides, drift control agents, deposition enhancers, adjuvants, evaporation retardants, freeze protecting agents, UV protecting agents, fragrances, and the like. Among the suitable diluents that are used in the invention there may be mentioned aliphatic alcohols and adducts thereof with alkylene oxides such as glycols and alcohols including ethanol, isopropyl alcohol and propylene glycol. A suitable amount of the optional diluents or flow enhancer is from zero to 20 % wt/v of the entire composition; more particularly, from zero to 10 % wt/v of the entire composition.

In addition, wetting composition according to the invention may be applied with other horticultural components for lawn, garden, or other vegetation treatment, including, further wetting agents, colorants (for aesthetic purposes or for application identification), perfumes, water, electrolytes, fertilizer, pesticides, plant growth regulators, growth hormones, minerals, spray pattern indicators and the like. Suitable, application to plants, parts of plants, seeds, or at their locus of growth may be made in any desired sequence, including simultaneously, separately, or in succession.

The wetting composition according to the invention can be manufactured according to known methods, such as by preparing (wet blending) a homogenous bulk mixture of components. One skilled in the art of formulations is capable of recognizing the variables and making adjustments to obtain a wetting composition having the components (a), (b) and/or (c) according to the invention without undue experimentation.

For example, in one embodiment, the wetting composition is prepared by adding an aliquot of at least one alkylene oxide copolymer (a) to an aliquot of at least one terpenic alkoxylate (b) and blending the liquid mixture with a high shear mixer.

In one aspect, the inventive wetting composition can be used for reducing the hydrophobicity of plant growth media such as peat moss, sphagnum peat, sedge peat, bark, and the like by treating such media with an effective amount of the composition. In one embodiment, the inventive wetting composition is suitable for use on soil is adapted for foliar use and application on all areas of golf courses, sports fields and other amenity turf areas.

In general, the wetting composition of the invention is well tolerated by all major turf species various turf grasses including the cool-season turf grasses (at seeding or to established annual ryegrass, fine fescue, Kentucky bluegrass, perennial ryegrass, tall fescue) and warm-season turf grasses (centipede, hybrid bermudagrass, and St. Augustinegrass. There may also be mentioned common bermuda and zoysiagrass).

In the practice of the invention, application of a suitable amount of the wetting agent composition to a turf space allows rain and irrigation water to enter into the root zone in areas that were previously or liable to be affected by localised dry spot. Following application water conservation effects occur throughout the root zone and not just on the surface or thatch layers. For optimum turf quality, the wetting agent of the invention may be used in conjunction with standard turf management practices that promote good turf health.

Typically, the application of the wetting agent composition can be made in a manner which prevents or reduces spray drift onto surrounding areas. In addition, the wetting agent composition typically is not applied when the ground is frozen.

In one aspect, the wetting agent composition of the invention is applied prophylacticly to reduce the development of dry patch (localised dry spot) in turf grass.

In practice, the wetting agent composition of the invention is applied in an effective amount which is typically at a rate of 20 1/ha in a water volume of 500-1000 litres per hectare using conventional spray equipment.

In a particular embodiment, spot treatments employ 200 ml of the wetting composition of the invention in 5-10 litres of water to treat an area of about 100 square metres.

In one aspect, an effective amount of the wetting agent of the invention is applied at approximately monthly intervals in a preventative programme to reduce the development of localised dry spot and aid water management. The wetting agent of the invention can typically be applied from early spring to autumn, but also can be applied throughout the year if required.

### EXAMPLES

### Materials and Methods

### Pots

28T Desch Plantpak 10L 28.3 cm diameter x 22.4 cm height; and 24 cm Whatman filter paper in bottom to retain soil.

### Non-water repellant soil

85% by weight dry sharp washed sand + 15% F1 Levington seed compost (minimum nutrients, fine texture, peat) at about 50% moisture mixed using Baromix Minor cement mixer (mains electric, about 50 L).

### Water repellant soil

1% w/v stock solution Ivory soap made up with deionised water 10 mL stock +10 mL deionised water mixed with 1 kg dry washed sharp sand oven dried at 100°C for 24 hours + 3g CaCl2 dissolved in 100 mL deionised water 1 mL diluted in 20 mL deionised water, sprayed on sand then mixed oven dried at 100°C for 24 hours +.

### Card cylinders

7 cm h x 8 cm diameter (1/3 A4 x 25 cm circumference and stapled); repellant soil packed into cylinders as similarly as possible for all cylinders. Cylinders placed centrally in each pot, non- repellent soil added around cylinder to surface and then card pulled out to leave repellent and non-repellent soils in contact.

### Wetting Composition A:

80% non-ionic alkylene oxide block copolymer R₁-O-EO-PO-EO-R₂, wherein R₁ and R₂ are hydrogen, molecular weight c. 2450, and for which 20% of molecule is polyethylene glycol; and 20% of a mixture of 50% of a terpenic alkoxylate Nopol-(POₙ-EOₘ)-H wherein n=5 and m=7 and 50% of propylene glycol.

### Wetting Composition B:

75% non-ionic alkylene oxide block copolymer R₁-O-EO-PO-EO-R₂, wherein R₁ and R₂ are hydrogen, molecular weight c. 2450, and for which 20% of molecule is polyethylene glycol; and 25% of a mixture of 50% of a terpenic alkoxylate Nopol-(POₙ-EOₘ)-H wherein n=5 and m=7 and 50% of propylene glycol.

### Treatments

| | **Wetting Agent Tested** | **Rate** |
|---|---|---|
| 1. | Composition A | 19 in 521 L ha⁻¹ |
| 2. | Composition B | 19 in 521 L ha⁻¹ |
| 3. | H2PRO (a soil wetting agent containing dipropylene glyocol methyl ether and 3-butoxypropan-2-ol) | 12 in 782 L ha⁻¹ |
| 4. | REVOLUTION® (a surfactant for rootzone moisture and maintenance of fine turf performance based on alkyl ethers of methyl oxirane - oxirane copolymer surfactants (EP 1 740 043 B1) | 16 in 782 L ha⁻¹ |
| 5. | AQUA-ZORB (a soil wetting agent containing a blend of non-ionic ethylene oxide derivatives) | 13 in 782 L ha⁻¹ |
| 6. | Untreated Control | - |

### Application:

Mardrive cabinet track sprayer, Nozzle Lurmark 06E80 at 5.5 bar (reservoir pressure), Speed 8.0 kmph, Nozzle height 52.5 cm, Volume rate for one pass = 260 L ha-1, 2 passes = 521, 3 = 782 L ha⁻¹.

### Rain simulation

Rain tower with a single Spraying Systems 1/8 GG 5 solid cone nozzle operated at 2.7 bar 3.5 m above a rotating target turntable, 7 minute runs, 6 pots per run, each run measured by collecting rain in 67.5 mm diameter beakers, 5 per run, mm rain derived from volume in beakers.

### Volumetric soil moisture

Measured using a Delta-T Devices Theta Probe Type ML1 (Frequency Domain Method) which has 4 spikes sampling a 2.5 cm diameter x 6 cm depth cylinder.

### Test A:

Volumetric moisture content based on simulated rain (mm)

| **mm** | **Composition A** | **Composition B** | **Revolution** | **H2PRO** | **AQUA-ZORB** | **Untreated** |
|---|---|---|---|---|---|---|
| 0.00 | 0.023 | 0.022 | 0.026 | 0.026 | 0.023 | 0.026 |
| 2.63 | 0.075 | 0.041 | 0.029 | 0.048 | 0.033 | 0.029 |
| 6.34 | 0.092 | 0.059 | 0.038 | 0.060 | 0.042 | 0.032 |
| 9.86 | 0.152 | 0.064 | 0.034 | 0.068 | 0.042 | 0.042 |
| 14.08 | 0.174 | 0.075 | 0.064 | 0.090 | 0.062 | 0.066 |
| 18.72 | 0.175 | 0.112 | 0.072 | 0.152 | 0.066 | 0.080 |
| 21.79 | 0.169 | 0.111 | 0.069 | 0.118 | 0.082 | 0.083 |
| 25.84 | 0.180 | 0.137 | 0.084 | 0.168 | 0.095 | 0.074 |
| 29.97 | 0.182 | 0.109 | 0.083 | 0.120 | 0.078 | 0.080 |

### Test B

Volumetric moisture content based on simulated rain (mm)

| **mm** | **Composition A** | **Composition B** | **Revolution** | **H2PRO** | **AQUA-ZORB** | **Untreated** |
|---|---|---|---|---|---|---|
| 0.00 | 0.020 | 0.024 | 0.026 | 0.022 | 0.026 | 0.025 |
| 3.41 | 0.053 | 0.048 | 0.033 | 0.035 | 0.035 | 0.034 |
| 6.79 | 0.057 | 0.051 | 0.025 | 0.029 | 0.022 | 0.025 |
| 10.42 | 0.093 | 0.056 | 0.034 | 0.041 | 0.031 | 0.035 |
| 15.06 | 0.108 | 0.085 | 0.038 | 0.057 | 0.032 | 0.056 |
| 19.69 | 0.170 | 0.154 | 0.085 | 0.097 | 0.068 | 0.072 |
| 22.99 | 0.192 | 0.122 | 0.097 | 0.106 | 0.121 | 0.082 |
| 26.62 | 0.171 | 0.155 | 0.098 | 0.107 | 0.114 | 0.066 |
| 30.39 | 0.189 | 0.143 | 0.082 | 0.111 | 0.101 | 0.076 |

The foregoing description and example are for the purpose of illustration only and does not limit the scope of protection which should be accorded this invention.

## Claims

1. A method of enhancing plant growth in a plant growth media by contacting the plants, parts of plants, seeds, their locus of growth or the plant growth media with an effective amount of a wetting composition comprising:
(a) a non-ionic alkylene oxide block copolymer molecule represented by the formula: H-O-Ethylene Oxide-Propylene Oxide-Ethylene Oxide-H, wherein the molecular weight is 2450 and wherein 20% of the molecule is polyethylene glycol; and
(b) an equal weight mixture of at least one terpenic alkoxylate and propylene glycol, wherein the terpenic alkoxylate is Nopol-(POn-EOm)-H, wherein Nopol is the hydroformylation product of β-pinene, and wherein n=5 and m=7; and
wherein the weight ratio of (a:b) is 80:20 or 75:25.

2. A method of reducing the development of dry patch at a locus selected from soil or turf grass by contacting the locus with an effective amount of a wetting composition according to claim 1.

3. A method of reducing the hydrophobicity of plant growth media which comprises the application an effective amount of a wetting composition according to claim 1 to the plant growth media.

4. A method of enhancing the bio-efficacy or bio-availability of at least one agrochemical said method comprising applying the agrochemical to plants, parts of plants, seeds, or at their locus of growth in any desired sequence, including simultaneously, separately, or in succession with a wetting composition according to claim 1 in an amount effective to enhance the bio-efficacy or bio-availability of said at least one agrochemical.

5. The method of claim 4, wherein the agrochemical is selected from a pesticide, a growth regulator and a fertilizer.

## Patentansprüche

1. Verfahren zur Verbesserung des Pflanzenwachstums in einem Pflanzenwachstumsmedium, bei dem man die Pflanzen, Pflanzenteile, Samen, ihren Wachstumsstandort oder das Pflanzenwachstumsmedium mit einer wirksamen Menge einer benetzenden Zusammensetzung in Kontakt bringt, die Folgendes umfasst:
(a) ein nichtionisches Alkylenoxid-Blockcopolymer-Molkekül, wiedergegeben durch die Formel: H-O-Ethylenoxid-Propylenoxid-Ethylenoxide-H, wobei das Molekulargewicht 2450 beträgt und wobei 20% des Moleküls aus Polyethylenglykol besteht; und
(b) eine Mischung aus gleichen Gewichtsteilen von mindestens einem Terpenalkoxylate und Propylenglykol, wobei es sich bei dem Terpenalkoxylat um Nopol-(POn-EOm)-H handelt, wobei Nopol das Hydroformylierungsprodukt von β-Pinen ist und wobei n=5 und m=7; und
wobei das Gewichtsverhältnis (a:b) 80:20 oder 75:25 beträgt.

2. Verfahren zum Reduzieren des Auftretens einer trockenen Stelle an einem Ort ausgewählt aus Boden oder Rasen, bei dem man den Ort mit einer wirksamen Menge einer benetzenden Zusammensetzung nach Anspruch 1 in Kontakt bringt.

3. Verfahren zum Reduzieren der Hydrophobizität von Pflanzenwachstumsmedien, bei dem man eine wirksame Menge einer benetzenden Zusammensetzung nach Anspruch 1 auf das Pflanzenwachstumsmedium aufbringt.

4. Verfahren zur Verbesserung der biologischen Wirksamkeit oder biologischen Verfügbarkeit mindestens einer agrochemischen Substanz, wobei man bei dem Verfahren die agrochemische Substanz in beliebiger Reihenfolge, einschließlich gleichzeitig, getrennt oder nacheinander, mit einer benetzenden Zusammensetzung nach Anspruch 1 in einer Menge, die die biologische Wirksamkeit oder biologische Verfügbarkeit der mindestens einen agrochemischen Substanz verbessert, auf Pflanzen, Pflanzenteile, Samen oder ihren Wachstumsstandort aufbringt.

5. Verfahren nach Anspruch 4, wobei die agrochemische Substanz aus einem Pestizid, einem Wachstumsregulator und einem Düngemittel ausgewählt ist.

## Revendications

1. Méthode d'amélioration de la croissance de plantes dans un milieu de croissance de plantes, par la mise en contact des plantes, des parties de plantes, des semences, de leur lieu de croissance ou du milieu de croissance de plantes avec une quantité efficace d'une composition mouillante comprenant :
(a) une molécule de copolymère bloc d'oxyde d'alkylène non ionique représentée par la formule :
H-O-Oxyde d'Ethylène-Oxyde de Propylène-Oxyde d'Ethylène-H, où le poids moléculaire est de 2450 et où 20% de la molécule sont constitués de polyéthylène glycol ; et
(b) un mélange à poids égal d'au moins un alcoxylate terpénique et de propylène glycol, où l'alcoxylate terpénique est le Nopol-(OPn-OEm)-H, où Nopol est le produit d'hydroformylation de β-pinène, et où n=5 et m=7 ; et
où le rapport pondéral de (a:b) est de 80:20 ou 75:25.

2. Méthode de réduction du développement de zones de sécheresse au niveau d'un lieu choisi parmi le sol ou un gazon, par la mise en contact du lieu avec une quantité efficace d'une composition mouillante selon la revendication 1.

3. Méthode de réduction de l'hydrophobie d'un milieu de croissance de plantes, comprenant l'application d'une quantité efficace d'une composition mouillante selon la revendication 1 au milieu de croissance de plantes.

4. Méthode d'amélioration de l'efficacité biologique ou de la biodisponibilité d'au moins une substance agrochimique, ladite méthode comprenant l'application de la substance agrochimique à des plantes, des parties de plantes, des semences, ou au niveau de leur lieu de croissance selon une séquence désirée quelconque, y compris simultanément, séparément, ou successivement, avec une composition mouillante selon la revendication 1 selon une quantité efficace pour améliorer l'efficacité biologique ou la biodisponibilité de ladite au moins une substance agrochimique.

5. Méthode selon la revendication 4, dans laquelle la substance agrochimique est choisie parmi un pesticide, une substance de croissance et un fertilisant.
